# DEMANDE DE BREVET EUROPEEN

(11) **EP 4 763 006 A1**
(43) Date de publication de la demande: **24.06.2026**
(21) Numéro de dépôt: 25220668.5
(22) Date de dépôt: 04.12.2025
(51) Int. Cl.: A47J 31/44

(54) **DISPOSITIF DE MOUSSAGE DE LAIT**

(30) Priorité: 20.12.2024 FR 2415002
(71) Demandeur: SEB S.A., 69130 Ecully (FR)
(72) Inventeur: MORIN, Gilles, 69134 ECULLY CEDEX (FR); DASSONVILLE, Yohan, 69134 ECULLY CEDEX (FR)
(74) Mandataire: SEB Développement

(57) **Abrégé**

Le dispositif de moussage de lait (2) comporte une partie de mélange (6) comprenant un conduit d'écoulement principal (23), pourvu d'une restriction de section (24), et une chambre de mélange (21) reliée fluidiquement au conduit d'écoulement principal (23) ; une partie de fermeture configurée pour fermer la chambre de mélange (21) et le conduit d'écoulement principal (23) ; un conduit d'amenée d'eau comprenant un orifice de sortie d'eau (29) débouchant dans le conduit d'écoulement principal (23) ; un conduit d'amenée de lait comprenant un orifice de sortie de lait (35) débouchant dans le conduit d'écoulement principal (23) et présentant une section de passage supérieure à celle de l'extrémité aval d'une première portion de conduit appartenant au conduit d'écoulement principal (23) et située en amont de la restriction de section (24) ; et un conduit d'amenée d'air relié fluidiquement au conduit d'écoulement principal (23).

## Description

### Domaine technique

La présente invention concerne le domaine des appareils de distribution de boissons, et plus particulièrement le domaine des dispositifs de moussage de lait destinés à coopérer avec des machines à café.

### Etat de la technique

Le document FR3136356 divulgue un dispositif de moussage de lait comportant :
- une partie de mélange comprenant :
   ∘ un conduit d'écoulement principal comportant une restriction de section, une première portion de conduit qui est située en amont de la restriction de section et qui s'étend jusqu'à la restriction de section, et une deuxième portion de conduit qui est située en aval de la restriction de section et qui s'étend depuis la restriction de section,
   ∘ une chambre de mélange reliée fluidiquement au conduit d'écoulement principal et munie d'un orifice de sortie,
- une partie de fermeture mobile par rapport à la partie de mélange entre une position de fermeture dans laquelle la partie de fermeture ferme la chambre de mélange et le conduit d'écoulement principal et une position d'ouverture dans laquelle la chambre de mélange et le conduit d'écoulement principal sont ouverts et accessibles pour être nettoyés,
- un conduit d'amenée d'eau comprenant un orifice de sortie d'eau débouchant dans la première portion de conduit,
- un conduit d'amenée de lait comprenant un orifice de sortie de lait débouchant dans le conduit d'écoulement principal, et
- un conduit d'amenée d'air relié fluidiquement au conduit d'écoulement principal.

Le conduit d'écoulement principal est plus particulièrement configuré de telle sorte qu'un écoulement de liquide, notamment d'eau, et notamment encore de de vapeur d'eau, dans le conduit d'écoulement principal depuis l'orifice de sortie d'eau et jusqu'à la chambre de mélange génère une dépression dans le conduit d'amenée de lait et une dépression dans le conduit d'amenée d'air et entraîne une aspiration de lait et d'air dans le conduit d'écoulement principal.

La configuration particulière du dispositif de moussage de lait décrit dans le document FR3136356, et plus particulièrement de la partie de mélange et de la partie de fermeture, permet un nettoyage aisé du dispositif de moussage de lait.

La mousse de lait produite avec le dispositif de moussage de lait précité présente une température élevée, par exemple de l'ordre de 50 à 60°C, de telle sorte que ce dispositif de moussage de lait n'est pas approprié pour la préparation de boissons froides.

### Résumé de l'invention

La présente invention vise à remédier à tout ou partie de ces inconvénients.

Le problème technique à la base de l'invention consiste notamment à fournir un dispositif de moussage de lait qui puisse être démonté et nettoyé aisément, tout en permettant la préparation de boissons froides à base de mousse de lait.

A cet effet, la présente invention concerne un dispositif de moussage de lait destiné à coopérer avec un appareil de distribution de boissons, le dispositif de moussage de lait comportant :
- une partie de mélange comprenant :
   ∘ un conduit d'écoulement principal comportant une restriction de section, une première portion de conduit qui est située en amont de la restriction de section et qui s'étend jusqu'à la restriction de section, et une deuxième portion de conduit qui est située en aval de la restriction de section et qui s'étend depuis la restriction de section,
   ∘ une chambre de mélange reliée fluidiquement au conduit d'écoulement principal et munie d'un orifice de sortie,
- une partie de fermeture mobile par rapport à la partie de mélange entre une position de fermeture dans laquelle la partie de fermeture ferme la chambre de mélange et le conduit d'écoulement principal et une position d'ouverture dans laquelle la chambre de mélange et le conduit d'écoulement principal sont ouverts et accessibles pour être nettoyés,
- un conduit d'amenée d'eau comprenant un orifice de sortie d'eau débouchant dans la première portion de conduit,
- un conduit d'amenée de lait comprenant un orifice de sortie de lait débouchant dans le conduit d'écoulement principal, et
- un conduit d'amenée d'air relié fluidiquement au conduit d'écoulement principal,
l'orifice de sortie de lait présentant une section de passage qui est supérieure à la section de passage d'une extrémité aval de la première portion de conduit.

Une telle configuration de la partie de mélange, et en particulier du conduit d'écoulement principal et de l'orifice de sortie de lait, assure un débit d'aspiration de lait sensiblement plus important dans le conduit d'écoulement principal (par rapport aux dispositifs de moussage de lait de l'art antérieur), ce qui permet de réduire de manière significative l'échauffement du lait par la vapeur s'écoulant dans le conduit d'écoulement principal et donc de produire ainsi une mousse de lait qui est sensiblement à température ambiante, également nommée mousse de lait froide.

Ainsi, le dispositif de moussage de lait selon la présente invention peut être démonté et nettoyé aisément, tout en permettant la préparation de boissons froides à base de mousse de lait.

Le dispositif de moussage de lait peut en outre présenter une ou plusieurs des caractéristiques suivantes, prises seules ou en combinaison.

Selon un mode de réalisation de l'invention, le conduit d'amenée d'eau est un conduit d'amenée d'eau froide ou d'eau chaude ou de vapeur, et de préférence un conduit d'amenée d'eau chaude/vapeur.

Selon un mode de réalisation de l'invention, un rapport de la section de passage de l'orifice de sortie de lait sur la section de passage de l'extrémité aval de la première portion de conduit est supérieur à 3. Une telle valeur du rapport précité implique un sous-dimensionnement de l'extrémité aval de la première portion de conduit et un surdimensionnement de l'orifice de sortie de lait, ce qui induit d'une part une augmentation des pertes de charge au sein de la première portion de conduit et d'autre part une augmentation du débit d'aspiration de lait dans le conduit d'écoulement principal. Ainsi, une telle valeur du rapport précité permet de réduire encore l'échauffement du lait par la vapeur s'écoulant dans le conduit d'écoulement principal.

Selon un mode de réalisation de l'invention, le rapport de la section de passage de l'orifice de sortie de lait sur la section de passage de l'extrémité aval de la première portion de conduit est compris entre 3 et 40, avantageusement entre 3,5 et 31, et est par exemple égal à environ 10,5 ou 14,5.

Selon un mode de réalisation de l'invention, l'orifice de sortie de lait présente un diamètre compris entre 3 et 6 mm, et par exemple égal à 4,3 mm. Un tel dimensionnement de l'orifice de sortie de lait permet d'augmenter encore le débit d'aspiration de lait dans le conduit d'écoulement principal, et donc de réduire encore l'échauffement du lait par la vapeur s'écoulant dans le conduit d'écoulement principal.

Selon un mode de réalisation de l'invention, la restriction de section forme un système d'aspiration de lait et d'air basé sur l'effet venturi.

En d'autres termes, le conduit d'écoulement principal est configuré de telle sorte qu'un écoulement d'eau dans le conduit d'écoulement principal depuis l'orifice de sortie d'eau et jusqu'à la chambre de mélange génère une dépression dans le conduit d'amenée de lait et une dépression dans le conduit d'amenée d'air et entraîne une aspiration de lait et d'air dans le conduit d'écoulement principal. Une telle configuration du dispositif de moussage de lait permet de contrôler la quantité d'air et la quantité de lait admises dans la chambre de mélange, sans requérir la présence de moyens d'admission complexes et onéreux.

Selon un mode de réalisation de l'invention, le conduit d'amenée de lait débouche dans le conduit d'écoulement principal à proximité de la restriction de section.

Selon un mode de réalisation de l'invention, l'extrémité aval de la première portion de conduit présente une section de passage comprise entre 0,5 et 2 mm², et par exemple entre 0,7 et 1,3 mm². Un tel dimensionnement de l'extrémité aval de la première portion de conduit permet d'augmenter les pertes de charge au sein de la première portion de conduit, et ainsi d'augmenter la dépression au niveau de la restriction de section et donc au niveau de l'orifice de sortie de lait.

Selon un mode de réalisation de l'invention, l'extrémité amont de la deuxième portion de conduit présente une section de passage comprise entre 2 et 18 mm², avantageusement comprise entre 3 et 15 mm², et par exemple comprise entre 6 et 11 mm².

Selon un mode de réalisation de l'invention, la première portion de conduit présente une section transversale de forme globalement rectangulaire.

Selon un mode de réalisation de l'invention, l'extrémité aval de la première portion de conduit présente une largeur comprise entre 0,4 et 2 mm, et par exemple égale à 1 mm.

Selon un mode de réalisation de l'invention, l'extrémité aval de la première portion de conduit présente une hauteur comprise entre 0,6 et 1,5 mm, et par exemple égale à 0,8 mm ou 1,2 mm.

Selon un mode de réalisation de l'invention, la deuxième portion de conduit présente une section transversale de forme globalement rectangulaire.

Selon un mode de réalisation de l'invention, l'extrémité amont de la deuxième portion de conduit présente une hauteur comprise entre 1,5 et 3,5 mm, avantageusement entre 1,8 et 2,8 mm, et par exemple égale à 2,3 mm.

Selon un mode de réalisation de l'invention, l'extrémité amont de la deuxième portion de conduit présente une largeur comprise entre 2 et 5 mm, et par exemple égale à 3,5 mm ou 4 mm.

Selon un mode de réalisation de l'invention, l'extrémité aval de la deuxième portion de conduit présente une largeur comprise entre 2 et 6 mm.

Selon un mode de réalisation de l'invention, une paroi de fond de la deuxième portion de conduit comporte au moins une portion de surface qui est inclinée par rapport à l'horizontale (avantageusement d'un angle d'inclinaison compris entre 5 et 25°, et par exemple d'environ 15°) de telle sorte que la hauteur de la deuxième portion de conduit augmente en direction de la chambre de mélange.

Selon un mode de réalisation de l'invention, la première portion de conduit présente une section de passage qui diminue en direction de la restriction de section, et la deuxième portion de conduit présente une section de passage qui augmente en direction de la chambre de mélange.

Selon un mode de réalisation de l'invention, la deuxième portion de conduit comporte deux parois latérales qui sont parallèles ou divergent en direction de la chambre de mélange et qui sont inclinées l'une par rapport à l'autre d'un angle compris entre 0 et 20°, et avantageusement compris entre 0 et 10°.

Selon un mode de réalisation de l'invention, le conduit d'écoulement principal est entièrement délimité par la partie de mélange et la partie de fermeture. Ainsi, les protéines de lait, contenues dans le lait s'écoulant dans le conduit d'écoulement principal, ne sont pas susceptibles de modifier la géométrie de ce dernier, et donc d'avoir un impact sur la quantité d'air introduite dans la chambre de mélange.

Selon un mode de réalisation de l'invention, le dispositif de moussage de lait comporte un dispositif de réglage de débit d'air configuré pour régler un débit d'air s'écoulant dans le conduit d'amenée d'air. Une telle configuration du dispositif de moussage de lait selon la présente invention, et plus particulièrement la présence du dispositif de réglage de débit d'air, permet à un utilisateur d'adapter la consistance de la mousse de lait obtenue en fonction de ses souhaits et également de modifier le volume et/ou la quantité de mousse obtenue. L'utilisateur peut par exemple régler le débit d'air introduit dans la chambre de mélange afin d'obtenir une mousse de lait plus ou moins ferme.

Selon un mode de réalisation de l'invention, le dispositif de réglage de débit d'air comporte :
- un organe de réglage de débit, tel qu'un bouton de réglage de débit, monté mobile, et par exemple monté mobile en translation ou encore selon un mouvement hélicoïdal, selon une direction de déplacement et configuré pour occuper une pluralité de positions de réglage décalées les unes des autres selon la direction de déplacement, et
- un élément d'étanchéité, par exemple annulaire, délimitant en partie un passage d'écoulement d'air ayant une section de passage qui varie en fonction de la position occupée par l'organe de réglage de débit.

Une telle configuration du dispositif de réglage de débit d'air permet de régler aisément la quantité d'air introduite dans le conduit d'écoulement principal en déplaçant l'organe de réglage de débit dans une position de réglage correspondant à la consistance de mousse souhaitée.

Selon un mode de réalisation de l'invention, l'organe de réglage de débit est déplaçable entre une position de réglage maximale dans laquelle la section de passage du passage d'écoulement d'air est maximale, et une position de réglage minimale dans laquelle la section de passage du passage d'écoulement d'air est minimale.

Selon un mode de réalisation de l'invention, l'élément d'étanchéité est fixé à l'organe de réglage de débit. Un tel agencement de l'élément d'étanchéité permet un montage aisé du dispositif de réglage de débit d'air.

Selon un mode de réalisation de l'invention, le conduit d'amenée d'air comprend un passage d'air calibré, par exemple annulaire, configuré pour définir un débit d'air maximal dans le conduit d'amenée d'air. La présence d'un tel passage d'air calibré permet d'éviter l'admission d'une quantité d'air trop importante dans la chambre de mélange, et donc l'obtention d'une mousse de lait qui soit trop aérée et/ou pourvue de bulles de grands diamètres.

Selon un mode de réalisation de l'invention, le passage d'air calibré est situé en aval du dispositif de réglage de débit d'air, et par exemple en aval du passage d'écoulement d'air.

Selon un mode de réalisation de l'invention, le dispositif de réglage de débit d'air comporte au moins une ouverture d'admission d'air, le passage d'écoulement d'air étant configuré pour relier fluidiquement l'au moins une ouverture d'admission d'air au passage d'air calibré.

Selon un mode de réalisation de l'invention, le dispositif de réglage de débit d'air comporte une partie de support fixée à la partie de fermeture et configurée pour supporter l'organe de réglage de débit, l'organe de réglage de débit étant monté mobile par rapport à la partie de support.

Selon un mode de réalisation de l'invention, la partie de support comporte un trou d'insertion, et le dispositif de réglage de débit d'air comporte en outre un organe de restriction de passage logé au moins en partie dans le trou d'insertion, le trou d'insertion et l'organe de restriction de passage délimitant le passage d'air calibré. Une telle configuration du passage d'air calibré permet un nettoyage aisé du dispositif de moussage de lait selon la présente invention, et en particulier du passage d'air calibré, en retirant l'organe de restriction de passage hors du trou d'insertion et en procédant ensuite au nettoyage notamment de l'organe de restriction de passage et du trou d'insertion. De plus, une telle configuration du passage d'air calibré limite sensiblement les risques d'obstruction du passage d'air calibré puisque les mouvements successifs de l'organe de réglage de débit selon la direction de déplacement ont pour conséquence d'évacuer, hors du passage d'air calibré, des éventuelles particules, telles que des particules de poussière, retenues dans le passage d'air calibré.

Selon un mode de réalisation de l'invention, l'organe de restriction de passage est solidaire en mouvement de l'organe de réglage de débit. Ainsi, l'organe de restriction de passage est monté mobile dans le trou d'insertion selon la direction de déplacement.

Selon un mode de réalisation de l'invention, l'élément d'étanchéité et la partie de support délimitent le passage d'écoulement d'air.

Selon un mode de réalisation de l'invention, la partie de support comporte une surface d'appui, par exemple prévue sur une face d'extrémité supérieure de la partie de support, qui est annulaire et contre laquelle est apte à être comprimé l'élément d'étanchéité.

Selon un mode de réalisation de l'invention, la partie de support comporte une rainure de passage qui est ménagée dans la surface d'appui prévue sur la partie de support et qui délimite en partie le passage d'écoulement d'air. La rainure de passage peut par exemple s'étendre sensiblement radialement par rapport à un axe central de la surface d'appui.

Selon un mode de réalisation de l'invention, le trou d'insertion présente un diamètre supérieur à un millimètre, de préférence supérieur à 1,5 millimètres. Le trou d'insertion peut par exemple présenter un diamètre compris entre 1,5 et 2 mm, avantageusement entre 1,7 et 1,9 mm, et par exemple égal à environ 1,8 mm.

Selon un mode de réalisation de l'invention, la partie de mélange comporte une face supérieure dans laquelle est ménagé le conduit d'écoulement principal et dans laquelle débouche la chambre de mélange.

Selon un mode de réalisation de l'invention, la partie de fermeture comporte le conduit d'amenée d'air. Un tel agencement du conduit d'amenée d'air permet de limiter sensiblement les risques d'altération du conduit d'amenée d'air par les protéines de lait contenues dans le lait s'écoulant dans le conduit d'écoulement principal, et donc de garantir l'admission d'une quantité d'air maîtrisée dans la chambre de mélange.

Selon un mode de réalisation de l'invention, la partie de mélange comporte au moins en partie le conduit d'amenée de lait.

Selon un mode de réalisation de l'invention, le conduit d'amenée de lait comprend un passage d'écoulement calibré configuré pour définir un débit de lait prédéterminé dans le conduit d'amenée de lait. Ces dispositions permettent de garantir l'admission d'une quantité de lait prédéterminée dans la chambre de mélange, et donc l'obtention d'une mousse de lait ayant une consistance appropriée.

Selon un mode de réalisation de l'invention, le dispositif de moussage de lait comporte un joint d'étanchéité agencé à une zone de jonction entre la partie de mélange et la partie de fermeture, le joint d'étanchéité s'étendant autour de la chambre de mélange et du conduit d'écoulement principal.

Selon un mode de réalisation de l'invention, la partie de mélange comporte un canal d'admission d'air configuré pour être fermé par la partie de fermeture, le canal d'admission d'air reliant le conduit d'amenée d'air au conduit d'écoulement principal. De façon avantageuse, le joint d'étanchéité s'étend autour du canal d'admission d'air.

Selon un mode de réalisation de l'invention, le canal d'admission d'air débouche dans le conduit d'écoulement principal à proximité de la restriction de section.

Selon un mode de réalisation de l'invention, le canal d'admission d'air est ménagé dans la face supérieure de la partie de mélange.

Selon un mode de réalisation de l'invention, le conduit d'écoulement principal, et plus particulièrement la deuxième portion de conduit, est configuré(e) pour permettre un premier mélange de l'eau, du lait et de l'air provenant respectivement de l'orifice de sortie d'eau, du conduit d'amenée de lait et du canal d'admission d'air, avant leur arrivée dans la chambre de mélange.

Selon un mode de réalisation de l'invention, la chambre de mélange est du type cyclonique et est configurée pour s'étendre sensiblement verticalement, le conduit d'écoulement principal débouchant dans une partie supérieure de la chambre de mélange et l'orifice de sortie étant situé dans une partie inférieure de la chambre de mélange. Une telle configuration de la chambre de mélange favorise le mélange de l'air, du lait et de l'eau chaude, de l'eau froide ou de la vapeur d'eau introduits dans la chambre de mélange.

Selon un mode de réalisation de l'invention, la partie de fermeture est configurée pour recouvrir la partie de mélange.

Selon un mode de réalisation de l'invention, le dispositif de moussage de lait comporte un réservoir de lait comprenant une ouverture de remplissage supérieure, la partie de mélange étant agencée au niveau de l'ouverture de remplissage supérieure, et est par exemple logée au moins en partie dans le réservoir de lait.

Selon un mode de réalisation de l'invention, le conduit d'amenée de lait comporte un tube d'aspiration de lait s'étendant sensiblement verticalement et débouchant dans une partie inférieure du réservoir de lait.

Selon un mode de réalisation de l'invention, le dispositif de moussage de lait comporte un conduit de déversement de lait relié fluidiquement à l'orifice de sortie de la chambre de mélange et configuré pour être situé verticalement au-dessus d'un récipient, tel qu'une tasse.

Selon un mode de réalisation de l'invention, la partie de mélange est configurée pour fermer au moins partiellement le réservoir de lait et pour être amovible par rapport au réservoir de lait.

Selon un mode de réalisation de l'invention, la partie de mélange forme un couvercle configuré pour fermer le réservoir de lait.

Selon un mode de réalisation de l'invention, le dispositif de moussage de lait comporte un système de maintien configuré pour maintenir la partie de fermeture en position de fermeture. Une telle configuration du système de maintien permet d'éviter un déplacement intempestif de la partie de fermeture vers la position d'ouverture.

Selon un mode de réalisation de l'invention, le système de maintien est configuré pour fixer de manière amovible, c'est-à-dire de manière temporaire et réversible, la partie de fermeture à la partie de mélange.

Selon un mode de réalisation de l'invention, le système de maintien est configuré pour plaquer la partie de fermeture contre la partie de mélange lorsque la partie de fermeture est en position de fermeture, de manière à comprimer le joint d'étanchéité, et plus particulièrement une lèvre d'étanchéité du joint d'étanchéité. Une telle configuration du système de maintien permet d'améliorer l'efficacité du joint d'étanchéité, et donc de limiter les risques de fuite de fluide au niveau du joint d'étanchéité.

Selon un mode de réalisation de l'invention, le dispositif de moussage de lait comporte un système de fixation configuré pour fixer de manière amovible, c'est-à-dire de manière temporaire et réversible, la partie de mélange au réservoir de lait.

La présente invention concerne en outre un appareil de distribution de boissons, et par exemple une machine à café, telle qu'une machine à café automatique, comportant un embout de sortie d'eau et un dispositif de moussage de lait selon la présente invention, le conduit d'amenée d'eau du dispositif de moussage de lait étant configuré pour être relié fluidiquement à l'embout de sortie d'eau.

Selon un mode de réalisation de l'invention, l'appareil de distribution de boissons comporte une chaudière configurée pour produire de l'eau chaude et/ou de la vapeur. De façon avantageuse, l'embout de sortie d'eau est relié fluidiquement à la chaudière.

Par machine à café automatique, on comprend que la machine à café comprend notamment une chambre d'infusion qui peut être alimentée en mouture de café par un broyeur à grain incorporé dans la machine, ou une chambre d'infusion qui peut recevoir une capsule ou une dosette de café ou une chambre d'infusion formée par une cuillère destinée à être remplie de mouture de café et vidée manuellement.

### Brève description des figures

L'invention sera mieux comprise à l'aide de la description qui suit en référence aux dessins schématiques annexés représentant, à titre d'exemple non limitatif, une forme d'exécution de ce dispositif de moussage de lait .
Figure 1 est une vue en perspective de dessus d'un dispositif de moussage de lait selon la présente invention.
Figure 2 est une vue de dessus du dispositif de moussage de lait de la figure 1.
Figure 3 est une vue en perspective, tronquée longitudinalement, du dispositif de moussage de lait de la figure 1.
Figure 4 est une vue en perspective d'un joint d'étanchéité du dispositif de moussage de lait de la figure 1.
Figure 5 est une vue partielle en perspective de dessus du dispositif de moussage de lait de la figure 1.
Figure 6 est une vue partielle en perspective de dessus du dispositif de moussage de lait de la figure 1 dans laquelle le joint d'étanchéité a été déposé.
Figure 7 est une vue en perspective de dessus d'une partie de mélange et d'une partie de fermeture du dispositif de moussage de lait de la figure 1.
Figure 8 est une vue en perspective et en éclaté du dispositif de moussage de lait de la figure 1.
Figure 9 est une vue partielle en perspective de dessus de la partie de mélange équipée du joint d'étanchéité de la figure 4.
Figure 10 est une vue de dessus, à l'échelle agrandie, de la partie de mélange équipée du joint d'étanchéité de la figure 4.
Figure 11 est une vue partielle en perspective, tronquée longitudinalement, du dispositif de moussage de lait de la figure 1.
Figure 12 est une vue en perspective de dessous d'un sous-ensemble du dispositif de moussage de lait de la figure 1.
Figure 13 est une vue en perspective de dessus d'une partie de verrouillage appartement au dispositif de moussage de lait de la figure 1.
Figure 14 est une vue partielle de dessus de la partie de mélange.
Figure 15 est une en coupe transversale du dispositif de moussage de lait de la figure 1
Figure 16 est une vue partielle en perspective de dessus d'un dispositif de réglage de débit d'air appartenant au dispositif de moussage de lait de la figure 1.
Figure 17 est une vue en perspective de dessus d'une partie de support appartenant au dispositif de réglage de débit d'air de la figure 15.
Figure 18 est une vue en perspective de dessus de la partie de support et d'un organe de restriction de passage appartenant au dispositif de réglage de débit d'air de la figure 16.
Figure 19 est une vue partielle en perspective de dessus du dispositif de réglage de débit d'air de la figure 16.
Figure 20 est une vue en coupe longitudinale du dispositif de réglage de débit d'air de la figure 16.
Figure 21 est une vue en perspective d'une machine à café automatique équipée du dispositif de moussage de lait de la figure 1.

### Description détaillée

Dans le présent document, le terme « ouvert » en relation avec le conduit d'écoulement principal signifie que le conduit d'écoulement principal est ouvert sur au moins 70 % de sa longueur et par exemple sur l'intégralité de sa longueur.

Dans le présent document, les termes « amont » et « aval » en relation avec le conduit d'écoulement principal sont définis par rapport au sens de circulation d'un fluide, au sein du conduit d'écoulement principal, en conditions d'utilisation du dispositif de moussage de lait.

A défaut de stipulation contraire, le terme « sensiblement » signifie, dans le présent document, « exactement ou à 10% ou à 10° près ».

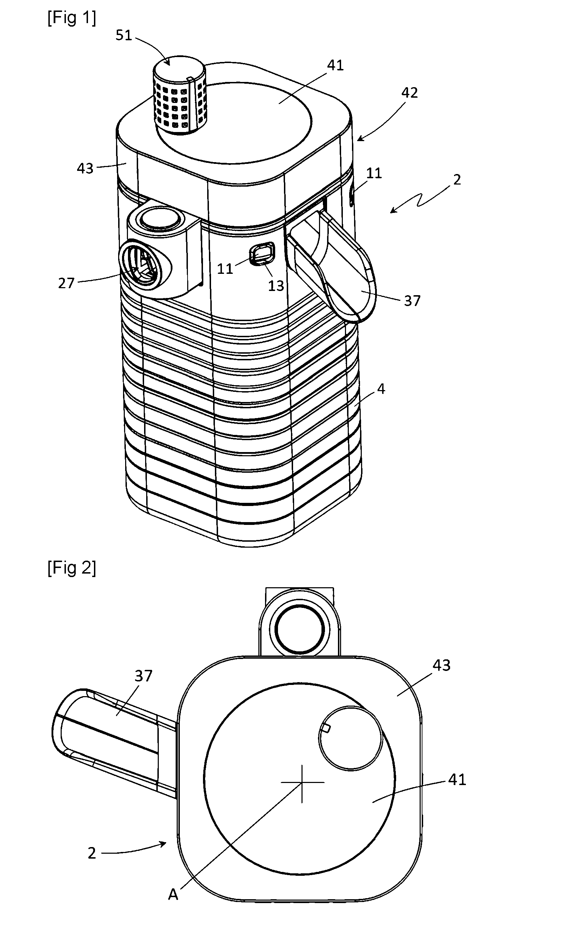

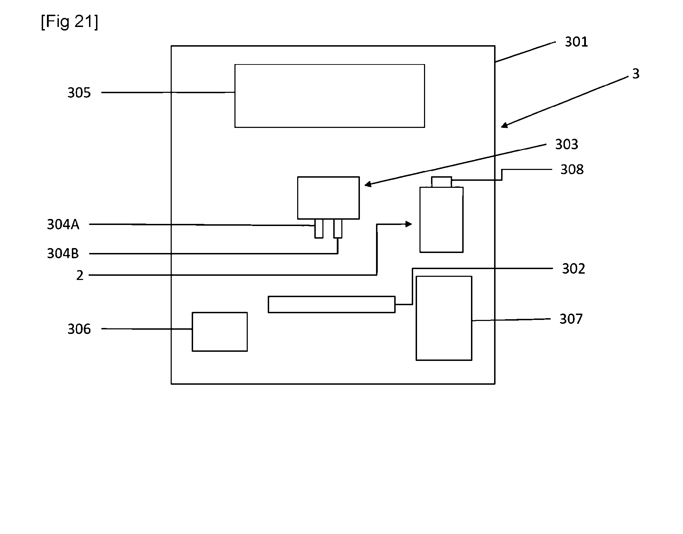

Les figures 1 à 20 représentent un dispositif de moussage de lait 2 destiné à coopérer avec un appareil de distribution de boissons 3 (voir la figure 21), par exemple une machine à café, telle qu'une machine à café automatique. En variante, l'appareil de distribution de boisson 3 pourrait être une machine de distribution d'eau et notamment une machine de distribution d'eau chaude ou de thé.

L'appareil de distribution de boissons 3 comporte notamment un bâti 301, un support de récipient 302 sur lequel un récipient peut être disposé, et une tête de distribution de boisson 303. La tête de distribution de boisson 303 comporte au moins une buse, de préférence deux buses de sortie de café 304A, 304B.

L'appareil de distribution de boissons 3 comporte un circuit de commande 305 pour gérer la réalisation d'une boisson à partir des instructions données par un utilisateur. L'appareil de distribution de boissons 3 comporte également avantageusement une chaudière 306 produisant de l'eau chaude et/ou de la vapeur, et un réservoir 307 formant une réserve en eau froide. Le réservoir 307 permet d'alimenter la chaudière 306 pour produire de l'eau chaude et/ou de la vapeur.

L'appareil de distribution de boissons 3 comprend également un embout de sortie d'eau 308. L'embout de sortie d'eau est relié au réservoir 307. L'embout de sortie 308 est avantageusement un embout de sortie d'eau chaude/vapeur propre à être alimenté en eau chaude et/ou vapeur par la chaudière 306.

De manière connue et non représentée, l'appareil de distribution de boissons 3 comprend avantageusement un réservoir de grains de café, un moulin à grains automatique et une chambre d'infusion propre à recevoir les grains de café moulus et à être alimentée en eau chaude par la chaudière 306. La chambre d'infusion est reliée fluidiquement à la tête de distribution de boisson 303 de manière à ce que l'appareil de distribution de boissons 3 soit propre à distribuer une boisson à base de café au niveau des buses de sortie de café 304A, 304B.

Le dispositif de moussage de lait 2 comporte un réservoir de lait 4 délimitant un volume interne destiné à contenir du lait et comprenant une ouverture de remplissage supérieure 5 à travers laquelle du lait peut être introduit dans le réservoir de lait 4. Le réservoir de lait 4 peut par exemple présenter une section transversale de forme rectangulaire, circulaire ou encore oblongue.

Le dispositif de moussage de lait 2 comporte en outre une partie de mélange 6 agencée au niveau de l'ouverture de remplissage supérieure 5.

Selon le mode de réalisation représenté sur les figures, la partie de mélange 6 comporte un corps de fermeture 7 configuré pour fermer le réservoir de lait 4 et pour être amovible par rapport au réservoir de lait 4. Le corps de fermeture 7 est plus particulièrement configuré pour être logé dans une partie supérieure du réservoir de lait 4 et pour être inséré dans le réservoir de lait 4 via l'ouverture de remplissage supérieure 5 du réservoir de lait 4.

De façon avantageuse, le corps de fermeture 7 est configuré pour être immobile en rotation par rapport au réservoir de lait 4 lorsque le corps de fermeture 7 est reçu dans le réservoir de lait 4. A cet effet, le corps de fermeture 7 présente avantageusement une section transversale de forme rectangulaire.

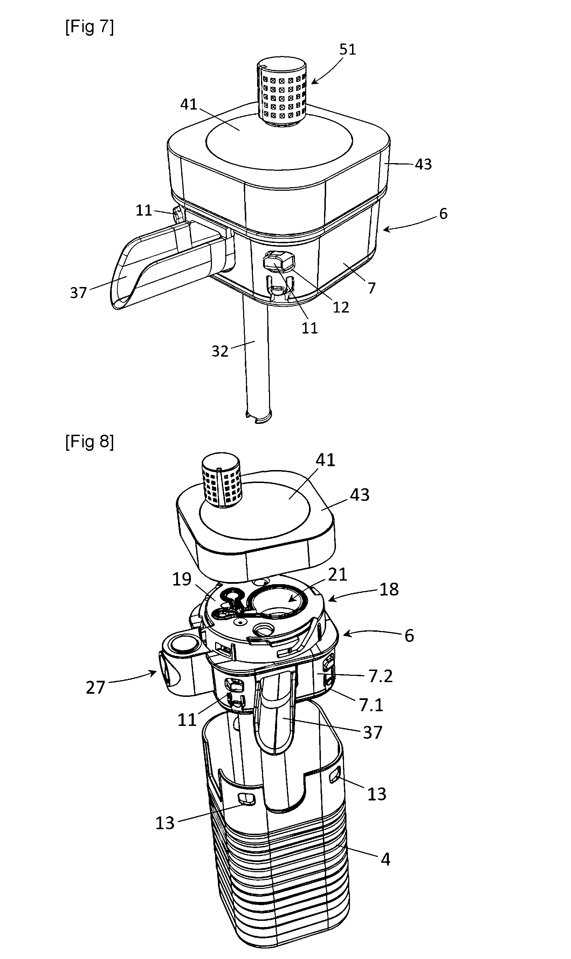

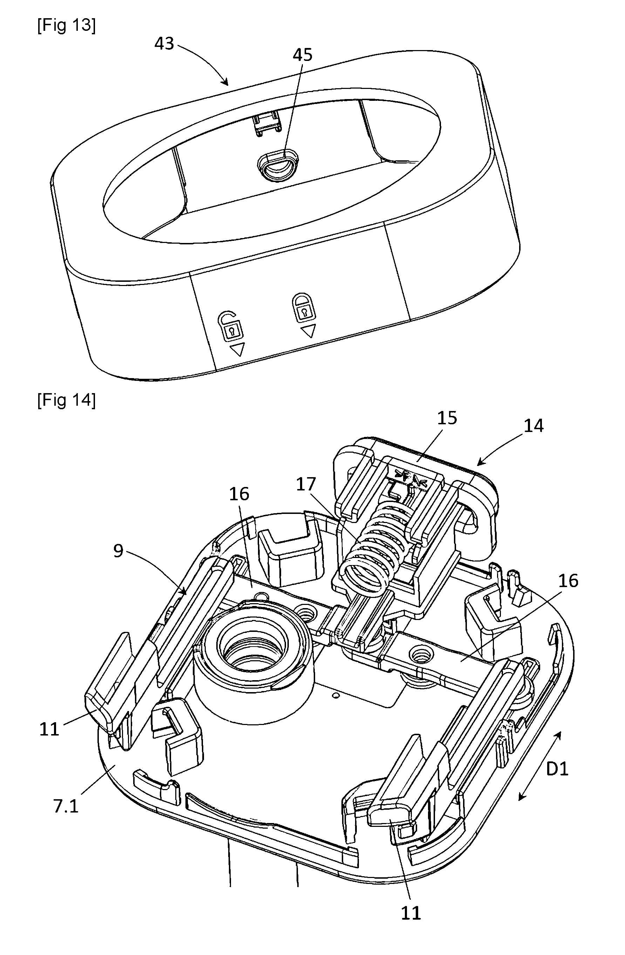

Selon le mode de réalisation représenté sur les figures, le corps de fermeture 7 comporte un corps inférieur 7.1 (voir la figure 14) et un corps supérieur 7.2 (voir la figure 8) qui sont fixés l'un à l'autre et qui délimitent un logement interne 8 dont la fonction sera décrite ci-après.

Comme montré sur la figure 14, le dispositif de moussage de lait 2 comporte un dispositif de fixation 9 configuré pour fixer de manière amovible, c'est-à-dire de manière temporaire et réversible, la partie de mélange 6, et plus particulièrement le corps de fermeture 7, au réservoir de lait 4.

Selon le mode de réalisation représenté sur les figures, le dispositif de fixation 9 comporte plusieurs organes de verrouillage 11, tel que des doigts de verrouillage, logés dans le logement interne 8. Chaque organe de verrouillage 11 est plus particulièrement configuré pour faire saillie hors du corps de fermeture 7 à travers une ouverture traversante 12 respective qui débouche dans une surface périphérique externe du corps de fermeture 7.

Le dispositif de fixation 9 comporte en outre plusieurs éléments de verrouillage 13 prévus sur le réservoir de lait 4 et situés à proximité de l'ouverture de remplissage supérieure 5. Selon le mode de réalisation représenté sur les figures, chaque élément de verrouillage 13 est formé par un orifice de verrouillage configuré pour recevoir un organe de verrouillage 11 respectif lorsque le corps de fermeture 7 est fixé au réservoir de lait 4. Cependant, selon une variante de réalisation de l'invention, les éléments de verrouillage 13 pourraient être par exemple des logements de verrouillage prévus sur une surface interne du réservoir de lait 4.

Les organes de verrouillage 11 sont plus particulièrement montés coulissants par rapport au corps de fermeture 7 selon une direction de coulissement D1 et entre une position de verrouillage dans laquelle chaque organe de verrouillage 11 fait saillie hors du corps de fermeture 7, à travers l'ouverture traversante 12 respective, et est configuré pour coopérer avec l'élément de verrouillage 13 respectif de manière à fixer le corps de fermeture 7 au réservoir de lait 4, et une position de libération dans laquelle chaque organe de verrouillage 11 est configuré pour libérer l'élément de verrouillage 13 respectif de telle sorte que le corps de fermeture 7 peut être retiré du réservoir de lait 4. De façon avantageuse, la direction de coulissement D1 s'étend sensiblement orthogonalement par rapport à un axe central du corps de fermeture 7.

Chaque organe de verrouillage 11 peut par exemple être configuré pour être situé en retrait de la surface périphérique externe du corps de fermeture 7 ou pour être affleurant avec ladite surface périphérique externe lorsque les organes de verrouillage 11 occupent la position de libération.

Comme montré plus particulièrement sur la figure 14, le dispositif de moussage de lait 2 comporte un mécanisme d'actionnement 14 prévu sur le corps de fermeture 7 et configuré pour déplacer les organes de verrouillage 11 dans la position de libération lorsque le mécanisme d'actionnement 14 est actionné par un utilisateur.

Le mécanisme d'actionnement 14 comporte plus particulièrement un organe d'actionnement 15, tel qu'un bouton d'actionnement, qui est actionnable manuellement par un utilisateur et qui est configuré pour déplacer les organes de verrouillage 11 de la position de verrouillage à la position de libération. De façon avantageuse, l'organe d'actionnement 15 est monté coulissant par rapport au corps de fermeture 7 selon la direction de coulissement D1 et entre une première position d'actionnement et une deuxième position d'actionnement. Le mécanisme d'actionnement 14 et les organes de verrouillage 11 sont plus particulièrement configurés de telle sorte qu'un déplacement de l'organe d'actionnement 15 de la première position d'actionnement à la deuxième position d'actionnement entraîne un déplacement des organes de verrouillage 11 de la position de verrouillage à la position de libération.

Selon le mode de réalisation représenté sur les figures, le mécanisme d'actionnement 14 comporte deux organes de liaison 16 logés dans le logement interne 8 et configurés chacun pour relier mécaniquement l'organe d'actionnement 15 à un organe de verrouillage 11 respectif. Chaque organe de liaison 16 comporte une première portion d'extrémité sur laquelle est monté articulé, autour d'un premier axe d'articulation, l'organe d'actionnement 15, une deuxième portion d'extrémité sur laquelle est monté articulé, autour d'un deuxième axe d'articulation, l'organe de verrouillage 11 respectif, et une portion intermédiaire qui est montée mobile en rotation par rapport au corps de fermeture 7 autour d'un axe de rotation qui est sensiblement parallèle aux premier et deuxième axes d'articulation respectifs.

Le mécanisme d'actionnement 14 est plus particulièrement configuré de telle sorte qu'un déplacement de l'organe d'actionnement 15 de la première position d'actionnement à la deuxième position d'actionnement entraîne un pivotement des deux organes de liaison 16 dans un premier sens de pivotement et un déplacement des deux organes de verrouillage 11 de la position de verrouillage à la position de libération, et de telle sorte qu'un déplacement de l'organe d'actionnement 15 de la deuxième position d'actionnement à la première position d'actionnement entraîne un pivotement des deux organes de liaison 16 dans un deuxième sens de pivotement et un déplacement des deux organes de verrouillage 11 de la position de libération à la position de verrouillage.

De façon avantageuse, le mécanisme d'actionnement 14 comporte un élément de rappel 17, tel qu'un ressort de rappel, configuré pour rappeler l'organe d'actionnement 15 dans la première position d'actionnement, et donc pour rappeler les deux organes de verrouillage 11 dans la position de verrouillage.

Selon le mode de réalisation représenté sur les figures, la partie de mélange 6 comporte en outre un corps de mélange 18 qui est fixé, par exemple par encliquetage, au corps de fermeture 7. Le corps de mélange 18 est plus particulièrement pourvu d'une face supérieure 19 qui est globalement plane.

Le corps de mélange 18 comporte en outre une chambre de mélange 21, également appelée chambre d'homogénéisation, qui débouche dans la face supérieure 19 du corps de mélange 18 et qui est munie d'un orifice de sortie 22. Le corps de mélange 18 comporte également un conduit d'écoulement principal 23 ménagé dans la face supérieure 19 du corps de mélange 18 et débouchant dans la chambre de mélange 21. Selon le mode de réalisation représenté sur les figures, la chambre de mélange 21 est du type cyclonique et est configurée pour s'étendre verticalement, et le conduit d'écoulement principal 23 débouche tangentiellement dans la chambre de mélange 21. De façon avantageuse, le conduit d'écoulement principal 23 débouche dans une partie supérieure de la chambre de mélange 21, et par exemple dans un point haut de la chambre de mélange 21, et l'orifice de sortie 22 est situé dans une partie inférieure de la chambre de mélange 21, et est par exemple situé en un point bas de la chambre de mélange 21.

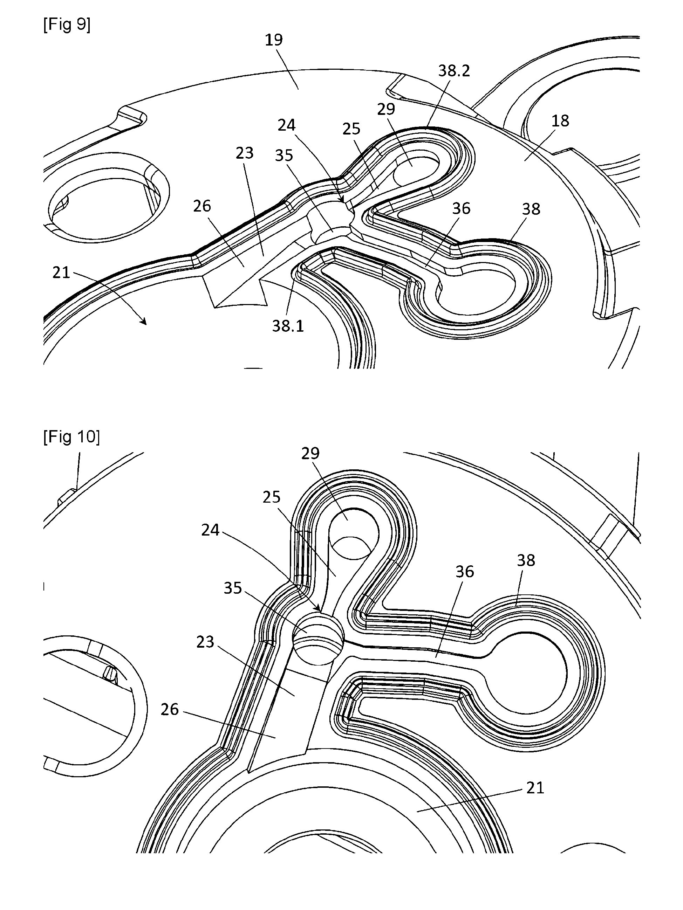

Comme montré plus particulièrement sur la figure 9, le conduit d'écoulement principal 23 comporte une restriction de section 24 située par exemple dans une portion centrale du conduit d'écoulement principal 23, une première portion de conduit 25 qui est située en amont de la restriction de section 24 et qui s'étend jusqu'à la restriction de section 24, et une deuxième portion de conduit 26 qui est située en aval de la restriction de section 24 et qui s'étend depuis la restriction de section 24 et jusqu'à la chambre de mélange 21. De façon avantageuse, la première portion de conduit 25 présente une section de passage qui diminue en direction de la restriction de section 24. La deuxième portion de conduit 26 présente une section de passage qui augmente en direction de la chambre de mélange 21.

Selon le mode de réalisation représenté sur les figures, la deuxième portion de conduit 26 comporte deux parois latérales qui sont parallèles ou qui divergent en direction de la chambre de mélange 21 et qui sont inclinées l'une par rapport à l'autre d'un angle compris entre 0 et 20°, avantageusement compris entre 0 et 10°, et par exemple d'environ 4°.

Comme montré sur la figure 9, la deuxième portion de conduit 26 comporte une paroi de fond pourvue d'au moins une portion de surface qui est inclinée par rapport à l'horizontale de telle sorte que la hauteur de la deuxième portion de conduit 26 augmente en direction de la chambre de mélange 21. De façon avantageuse, la portion de surface est inclinée, par rapport à l'horizontale, d'un angle d'inclinaison compris entre 5 et 25°, et par exemple d'environ 15°
Selon le mode de réalisation représenté sur les figures, la première portion de conduit 25 présente une section transversale de forme globalement rectangulaire, et la deuxième portion de conduit 26 présente également une section transversale de forme globalement rectangulaire.

L'extrémité aval de la première portion de conduit 25 peut par exemple présenter une largeur comprise entre 0,4 et 2 mm et une hauteur comprise entre 0,6 et 1,5 mm, tandis que l'extrémité amont de la deuxième portion de conduit 26 peut par exemple présenter une largeur comprise entre 2 et 5 mm et une hauteur comprise entre 1,8 et 2,8 mm. Selon un mode de réalisation de l'invention, l'extrémité aval de la première portion de conduit 25 présente une largeur égale à 1 mm et une hauteur égale à 0,8 mm, tandis que l'extrémité amont de la deuxième portion de conduit 26 présente une largeur égale à 3,5 mm et une hauteur égale à 2,3 mm. Selon un mode de réalisation de l'invention, l'extrémité aval de la première portion de conduit 25 présente une largeur égale à 1 mm et une hauteur égale à 1,2 mm, tandis que l'extrémité amont de la deuxième portion de conduit 26 présente une largeur égale à 4 mm et une hauteur égale à 2,3 mm.

L'extrémité aval de la première portion de conduit 25 peut par exemple présenter une section de passage comprise entre 0,5 et 2 mm², et avantageusement entre 0,75 et 1,3 mm², et l'extrémité amont de la deuxième portion de conduit 26 peut par exemple présenter une section de passage comprise entre 2 et 18 mm², avantageusement comprise entre 3 et 15 mm², et par exemple comprise entre 6 et 11 mm².

La partie de mélange 6 comporte également un embout de raccordement 27 configuré pour être raccordé à l'embout de sortie d'eau 308 de l'appareil de distribution de boissons 3, et avantageusement pour être relié fluidiquement à la chaudière 306 qui équipe l'appareil de distribution de boissons 3 et qui est configurée pour produire de l'eau chaude et/ou de la vapeur. De façon avantageuse, l'embout de raccordement 27 s'étend radialement par rapport à un axe central du corps de mélange 18, et est configuré pour s'étendre radialement par rapport à l'axe central du réservoir de lait 4.

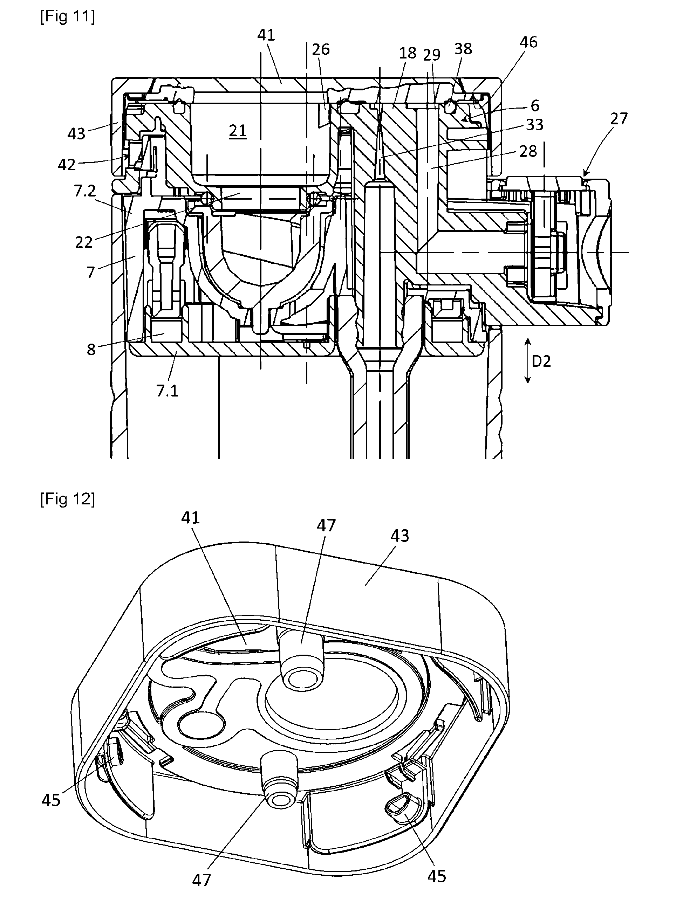

La partie de mélange 6 comporte de plus un conduit d'amenée d'eau 28 (voir la figure 11) qui est relié fluidiquement à l'embout de raccordement 27 et qui est pourvu d'un orifice de sortie d'eau 29 débouchant dans la première portion de conduit 25 et plus particulièrement à l'opposé de la chambre de mélange 21. De façon avantageuse, le conduit d'amenée d'eau est un conduit d'amenée d'eau chaude/vapeur.

Le conduit d'écoulement principal 23 est ainsi configuré pour relier fluidiquement l'orifice de sortie d'eau 29 à la chambre de mélange 21, et pour permettre un écoulement d'eau chaude, d'eau froide ou de vapeur dans le conduit d'écoulement principal 23 et jusqu'à la chambre de mélange 21.

Le dispositif de moussage de lait 2 comporte également un conduit d'amenée de lait 31 relié fluidiquement au conduit d'écoulement principal 23, et donc configuré pour être relié fluidiquement à la chambre de mélange 21 via le conduit d'écoulement principal 23.

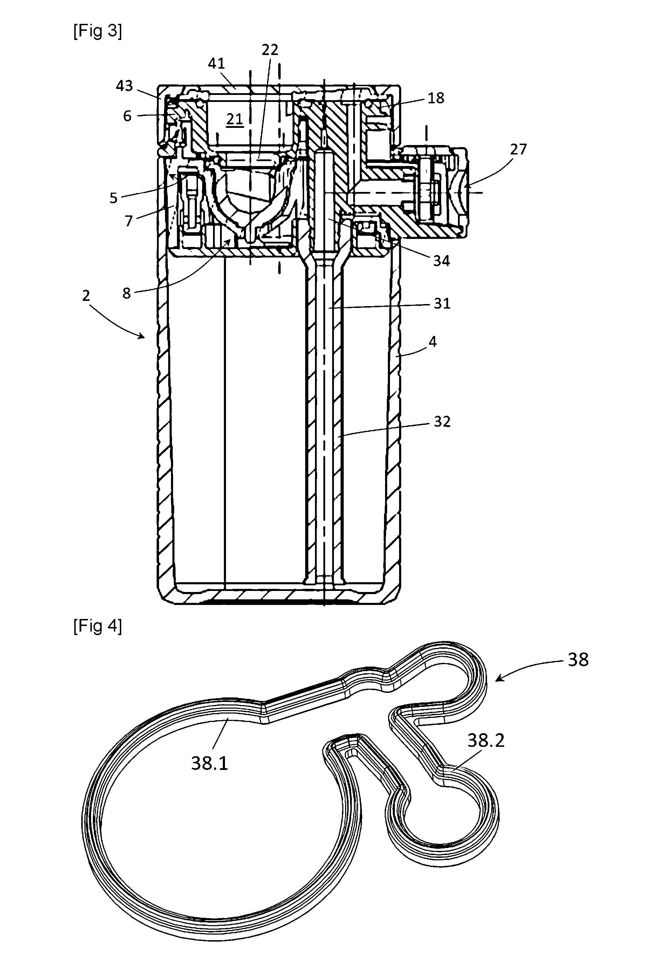

Comme montré plus particulièrement sur la figure 3, le conduit d'amenée de lait 31 comporte un tube d'aspiration de lait 32 fixé à la partie de mélange 6 (et plus particulièrement au corps de mélange 18), configuré pour s'étendre verticalement et débouchant dans une partie inférieure du réservoir de lait 4, et un passage d'écoulement calibré 33 délimité par le corps de mélange 18 et relié fluidiquement au tube d'aspiration de lait 32 par exemple via un conduit de liaison 34. Le passage d'écoulement calibré 33 est ainsi situé en aval du tube d'aspiration de lait 32, et est configuré pour définir un débit de lait prédéterminé dans le conduit d'amenée de lait 31.

Le passage d'écoulement calibré 33 comporte plus particulièrement un orifice de sortie de lait 35 débouchant dans le conduit d'écoulement principal 23 au niveau de la restriction de section 24. De façon avantageuse, l'orifice de sortie de lait 35 est de section circulaire, et présente un diamètre compris entre 3 et 6 mm, et par exemple égal à 4,3 mm.

L'orifice de sortie de lait 35 présente plus particulièrement une section de passage qui est supérieure à la section de passage de l'extrémité aval de la première portion de conduit 25. De façon avantageuse, un rapport de la section de passage de l'orifice de sortie de lait 35 sur la section de passage de l'extrémité aval de la première portion de conduit est compris entre 3 et 40, et avantageusement entre 3,5 et 31. Un tel rapport peut par exemple être égal à environ 10,5 ou 14,5.

Une telle configuration de l'extrémité aval de la première portion de conduit 25 et de l'orifice de sortie de lait 35 assure un débit d'aspiration de lait sensiblement plus important dans le conduit d'écoulement principal 23 (par rapport aux dispositifs de moussage de lait de l'art antérieur), ce qui permet de réduire de manière significative l'échauffement du lait par la vapeur s'écoulant dans le conduit d'écoulement principal 23 et donc de produire ainsi une mousse de lait froide, c'est-à-dire une mousse de lait sensiblement à température ambiante.

Selon le mode de réalisation représenté sur les figures, le corps de mélange 18 comporte en outre un canal d'admission d'air 36 qui est ménagé dans la face supérieure 19 du corps de mélange 18 et qui débouche dans le conduit d'écoulement principal 23 au niveau de la restriction de section 24. Le canal d'admission d'air 36 est ainsi configuré pour être relié fluidiquement à la chambre de mélange 21 via le conduit d'écoulement principal 23.

La restriction de section 24, décrite préalablement, induit une augmentation de la vitesse de la vapeur s'écoulant dans le conduit d'écoulement principal 23, ce qui génère une dépression dans le conduit d'amenée de lait 31 et dans le canal d'admission d'air 36. La restriction de section 24 est donc plus particulièrement configurée pour former un système d'aspiration de lait et d'air basé sur l'effet venturi. Le conduit d'écoulement principal 23 est ainsi configuré de telle sorte qu'un écoulement d'eau chaude, d'eau froide ou de vapeur dans le conduit d'écoulement principal 23 depuis l'orifice de sortie d'eau 29 et jusqu'à la chambre de mélange 21 génère une dépression dans le conduit d'amenée de lait 31 et une dépression dans le canal d'admission d'air 36 et entraîne par conséquent une aspiration de lait et d'air dans le conduit d'écoulement principal 23 et écoulement du lait et de l'air aspirés jusqu'à la chambre de mélange 21. De plus, la deuxième portion de conduit 26, qui présente une section de passage qui augmente en direction de la chambre de mélange 21, favorise un premier mélange de la vapeur, du lait et de l'air provenant respectivement de l'orifice de sortie d'eau 29, du conduit d'amenée de lait 31 et du canal d'admission d'air 36, avant leur arrivée dans la chambre de mélange 21 où l'on obtient une homogénéisation du mélange notamment via le mouvement cyclonique. Ainsi, la deuxième portion de conduit 26 forme une première zone de mélange dans laquelle un premier mélange est effectué, et la chambre de mélange 21 forme une deuxième zone de mélange dans laquelle le mélange commencé dans la première zone de mélange se poursuit.

La partie de mélange 6 comporte en outre un conduit de déversement de lait 37 relié fluidiquement à l'orifice de sortie 22 de la chambre de mélange 21, et configuré pour permettre un déversement de lait et de mousse de lait dans un récipient, tel qu'une tasse, disposé verticalement en dessous du conduit de déversement de lait 37. De façon avantageuse, le conduit de déversement de lait 37 est configuré pour s'étendre radialement par rapport à l'axe central du réservoir de lait 4.

Comme montré plus particulièrement sur la figure 4 et 9, le dispositif de moussage de lait 2 comporte un joint d'étanchéité 38 s'étendant autour de la chambre de mélange 21, du conduit d'écoulement principal 23 et du canal d'admission d'air 36. A cet effet, le corps de mélange 18 comporte une rainure de réception 39 ménagée dans la face supérieure 19 du corps de mélange 18 et dans laquelle est logé le joint d'étanchéité 38.

Selon le mode de réalisation représenté sur les figures, le joint d'étanchéité 38 comporte un corps de joint 38.1 logé intégralement dans la rainure de réception 39, et une lèvre d'étanchéité 38.2 s'étendant le long du corps de joint 38.1 et faisant saillie hors de la rainure de réception 39. De façon avantageuse, le joint d'étanchéité 38 est continu.

Le dispositif de moussage de lait 2 comporte de plus une partie de fermeture 41 configurée pour recouvrir le corps de mélange 18 et pour prendre appui contre le corps de mélange 18.

Comme montré sur la figure 3, la partie de fermeture 41 est globalement plane, et le joint d'étanchéité 38 est ainsi agencé à une zone de jonction entre la partie de mélange 6 et la partie de fermeture 41 qui est globalement plane.

La partie de fermeture 41 est plus particulièrement montée mobile par rapport à la partie de mélange 6 entre une position de fermeture dans laquelle la partie de fermeture 41 ferme la chambre de mélange 21, le conduit d'écoulement principal 23 et le canal d'admission d'air 36, et une position d'ouverture dans laquelle la chambre de mélange 21, le conduit d'écoulement principal 23 et le canal d'admission d'air 36 sont ouverts et accessibles pour être nettoyés.

De façon avantageuse, le dispositif de moussage de lait 2 comporte un système de maintien 42 (voir la figure 11) configuré pour maintenir la partie de fermeture 41 en position de fermeture et pour assurer une compression du joint d'étanchéité 38 lorsque la partie de fermeture 41 est en position de fermeture. Le système de maintien 42 est plus particulièrement configuré pour plaquer la partie de fermeture 41 contre la face supérieure 19 du corps de mélange 18 lorsque la partie de fermeture 41 est en position de fermeture, de manière à comprimer le joint d'étanchéité 38, et plus particulièrement la lèvre d'étanchéité 38.2 du joint d'étanchéité 38. Selon le mode de réalisation représenté sur les figures, le système de maintien 42 est également configuré pour fixer de manière amovible, c'est-à-dire de manière temporaire et réversible, la partie de fermeture 41 à la partie de mélange 6.

Comme montré sur la figure 3, le système de maintien 42 comporte une partie de verrouillage 43, tel qu'une bague de verrouillage, montée mobile en rotation par rapport à la partie de fermeture 41 autour d'un axe de rotation A et entre une position de libération dans laquelle la partie de verrouillage 43 autorise un déplacement de la partie de fermeture 41 vers la position d'ouverture et une position de verrouillage dans laquelle la partie de verrouillage 43 empêche un déplacement de la partie de fermeture 41 vers la position d'ouverture. L'axe de rotation A est avantageusement sensiblement parallèle à, et par exemple colinéaire avec, l'axe central du réservoir de lait 4 lorsque la partie de mélange 6 est reçue dans le réservoir de lait 4 et que la partie de fermeture 41 occupe la position de fermeture.

Selon le mode de réalisation représenté sur les figures, la partie de fermeture 41 est configurée pour occuper une position intermédiaire située entre la position de fermeture et la position d'ouverture et dans laquelle la partie de fermeture 41 repose sur la lèvre d'étanchéité 38.2 du joint d'étanchéité 38 et est donc située en regard de la chambre de mélange 21 et du conduit d'écoulement principal 23 et est espacée de la partie de mélange 6, et le système de maintien 42 est configuré pour déplacer la partie de fermeture 41 de la position intermédiaire à la position de fermeture et en direction de la partie de mélange 6, et donc pour rapprocher la partie de fermeture 41 de la partie de mélange 6, lorsque la partie de verrouillage 43 est déplacée de la position de libération vers la position de verrouillage.

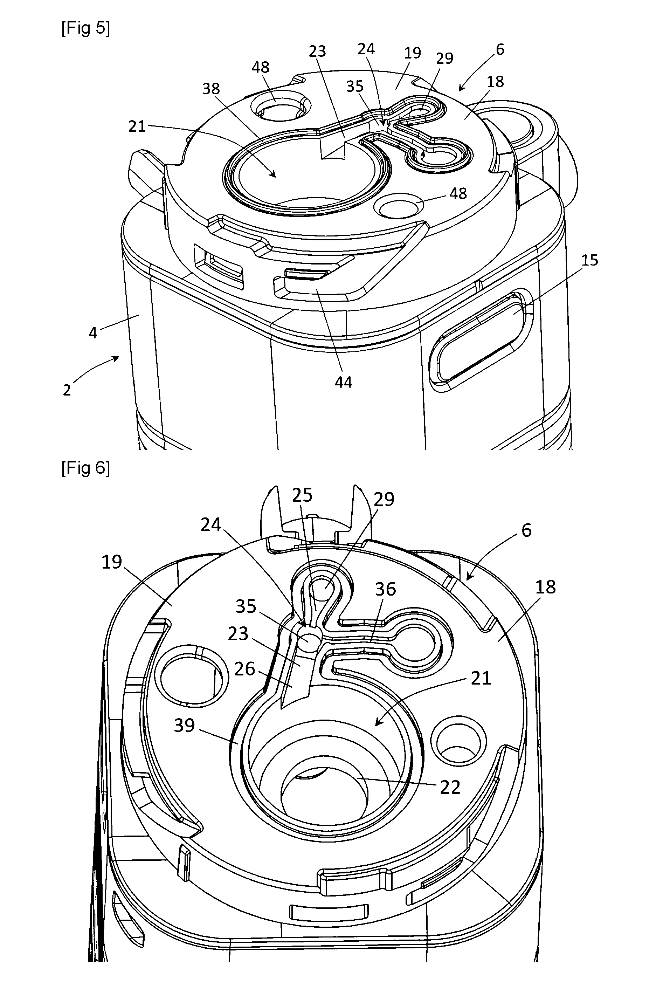

Comme montré sur les figures 5 et 12, le système de maintien 42 comporte en outre une pluralité d'organes de fixation 44, tels que des rampes de fixation ou rainures de fixation, prévus sur le corps de mélange 18 et répartis autour d'un axe central du corps de mélange 18, et une pluralité d'éléments de fixation 45, tels que des ergots de fixation, prévus sur la partie de verrouillage 43 et répartis autour de l'axe de rotation A. Les éléments de fixation 45 sont configurés pour coopérer respectivement avec les organes de fixation 44 prévus sur le corps de mélange 18 lors d'une rotation de la partie de verrouillage 43 de la position de libération vers la position de verrouillage, de manière à déplacer la partie de verrouillage 43 en direction de la partie de mélange 6. Les organes de fixation 44 et les éléments de fixation 45 peuvent par exemple former un système de fixation par baïonnettes ou du type vis-écrou. Selon le mode de réalisation représenté sur les figures, les organes de fixation 44 sont prévus sur une surface externe du corps de mélange 18, et les éléments de fixation 45 sont prévus sur une surface interne de la partie de verrouillage 43.

De façon avantageuse, la partie de verrouillage 43 comporte une face d'appui 46 (voir notamment la figure 11) qui s'étend transversalement à l'axe de rotation A et qui est configurée pour déplacer la partie de fermeture 41 vers la partie de mélange 6 et parallèlement à l'axe de rotation A lors d'une rotation de la partie de verrouillage 43 de la position de libération vers la position de verrouillage. La face d'appui 46 est plus particulièrement configurée pour glisser sur la partie de fermeture 41 lors d'une rotation de la partie de verrouillage 43 entre la position de libération et la position de verrouillage. De façon avantageuse, la face d'appui 46 est annulaire et est configurée pour prend appui contre un bord périphérique de la partie de fermeture 41.

Selon un mode de réalisation de l'invention, la partie de verrouillage 43 peut être montée de manière imperdable sur la partie de fermeture 41, de telle sorte que la partie de verrouillage 43 et la partie de fermeture 41 forment un sous ensemble indémontable.

Comme montré sur les figures 6 et 12, le dispositif de moussage de lait 2 comporte un dispositif de guidage en translation configuré pour guider en translation la partie de fermeture 41 par rapport à la partie de mélange 6 selon une direction de translation D2, qui est par exemple perpendiculaire à la zone de jonction et donc parallèle à l'axe de rotation A, lorsque la partie de fermeture 41 est déplacée entre la position intermédiaire et la position de fermeture. Le dispositif de guidage en translation peut par exemple comporter deux organes de guidage 47, tel que des plots de guidage, prévus sur la partie de fermeture 41, et deux éléments de guidage 48, tel que des orifices de guidage, prévus sur le corps de mélange 18 et aptes à recevoir respectivement les deux organes de guidage 47.

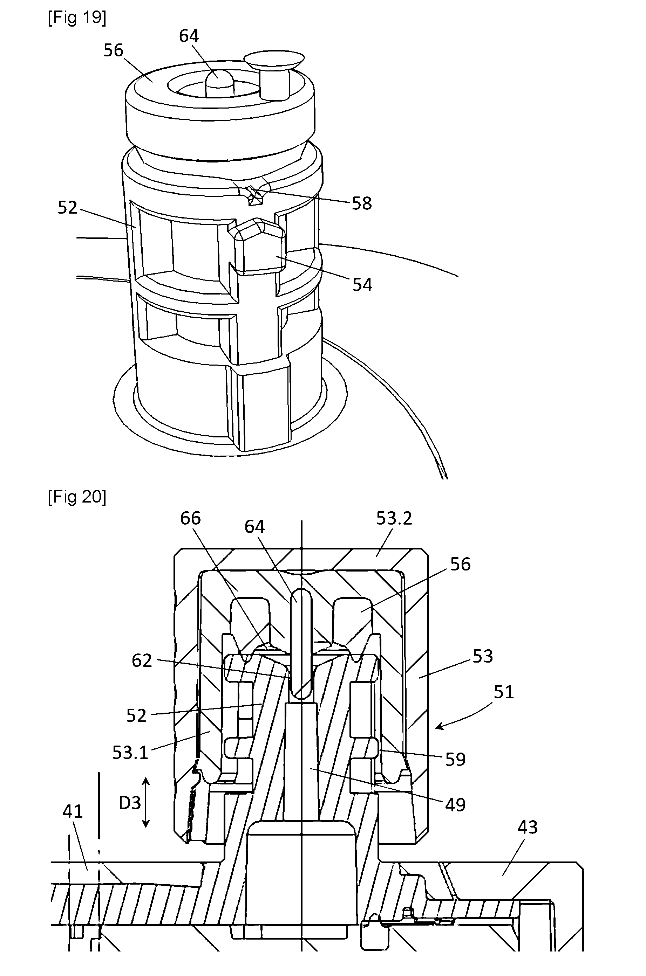

Comme montré plus particulièrement sur la figure 20, la partie de fermeture 41 comporte en outre un conduit d'amenée d'air 49 relié au conduit d'écoulement principal 23 via le canal d'admission d'air 36, et un dispositif de réglage de débit d'air 51 configuré pour régler un débit d'air s'écoulant dans le conduit d'amenée d'air 49. Cependant, selon une variante de réalisation de l'invention, la partie de mélange 6 pourrait être dépourvue du canal d'admission d'air 36, et le conduit d'amenée d'air 49 pourrait être relié directement au conduit d'écoulement principal 23.

Selon le mode de réalisation représenté sur les figures, le dispositif de réglage de débit d'air 51 comporte une partie de support 52 fixée à la partie de fermeture 41 et faisant saillie d'une face supérieure de la partie de fermeture 41, et un organe de réglage de débit 53, tel qu'un bouton de réglage de débit, supporté par la partie de support 52 et monté mobile, et par exemple monté mobile selon un mouvement hélicoïdal, par rapport à la partie de support 52 selon une direction de déplacement D3 qui peut par exemple être sensiblement verticale lorsque le dispositif de moussage de lait 2 repose sur une surface horizontale.

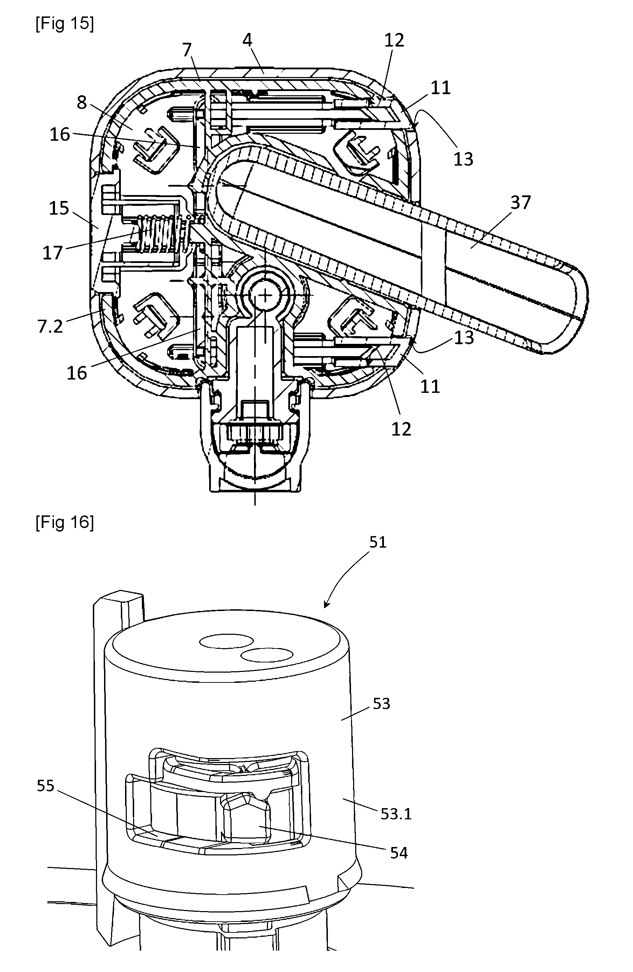

L'organe de réglage de débit 53 et la partie de support 52 peuvent par exemple s'étendre coaxialement l'un par rapport à l'autre, et la partie de support 52 peut par exemple comporter deux doigts de guidage 54 (voir la notamment figure 16) diamétralement opposés et montés coulissants respectivement dans deux rainures de guidage hélicoïdales 55 prévues sur l'organe de réglage de débit 53.

Selon le mode de réalisation représenté sur les figures, l'organe de réglage de débit 53 comporte une partie de réglage 53.1 qui est configurée pour coiffer la partie de support 52 et qui comporte une paroi supérieure recouvrant la partie de support 52 et une paroi périphérique ayant une forme globalement tubulaire et s'étendant autour de la partie de support 52. Comme montré plus particulièrement sur les figures 1 et 20, l'organe de réglage de débit 53 comporte en outre une partie de manipulation 53.2 solidaire de la partie de réglage 53.1 et configurée pour être manipulée par un utilisateur de manière à déplacer l'organe de réglage de débit 53 selon la direction de déplacement D3.

L'organe de réglage de débit 53 est configuré pour occuper une pluralité de positions de réglage décalées les unes des autres selon la direction de déplacement D3. De façon avantageuse, la direction de déplacement D3 est sensiblement parallèle à l'axe central du réservoir de lait 4 lorsque la partie de mélange 6 est reçue dans le réservoir de lait 4 et que la partie de fermeture 41 est en position de fermeture.

Le dispositif de réglage de débit d'air 51 comporte en outre un élément d'étanchéité 56 qui est annulaire et qui est fixé à l'organe de réglage de débit 53. Selon le mode de réalisation représenté sur les figures, la partie de support 52 comporte une surface d'appui 57, prévue sur une face d'extrémité supérieure de la partie de support 52, qui est annulaire et contre laquelle est apte à être comprimé l'élément d'étanchéité 56 en fonction de la position occupée par l'organe de réglage de débit 53.

L'élément d'étanchéité 56 et la partie de support 52 sont configurés pour délimiter un passage d'écoulement d'air 58 (voir la figure 19) ayant une section de passage qui varie en fonction de la position occupée par l'organe de réglage de débit 53. Le passage d'écoulement d'air 58 est plus particulièrement configuré pour relier fluidiquement une ouverture d'admission d'air 59, définie par le dispositif de réglage de débit d'air 51, au conduit d'amenée d'air 49. Selon le mode de réalisation représenté sur les figures, l'ouverture d'admission d'air 59 est définie par un jeu fonctionnel entre l'organe de réglage de débit 53 et la partie de support 52.

L'organe de réglage de débit 53 est plus particulièrement déplaçable entre une position de réglage maximale dans laquelle la section de passage du passage d'écoulement d'air 58 est maximale, et une position de réglage minimale dans laquelle la section de passage du passage d'écoulement d'air 58 est minimale.

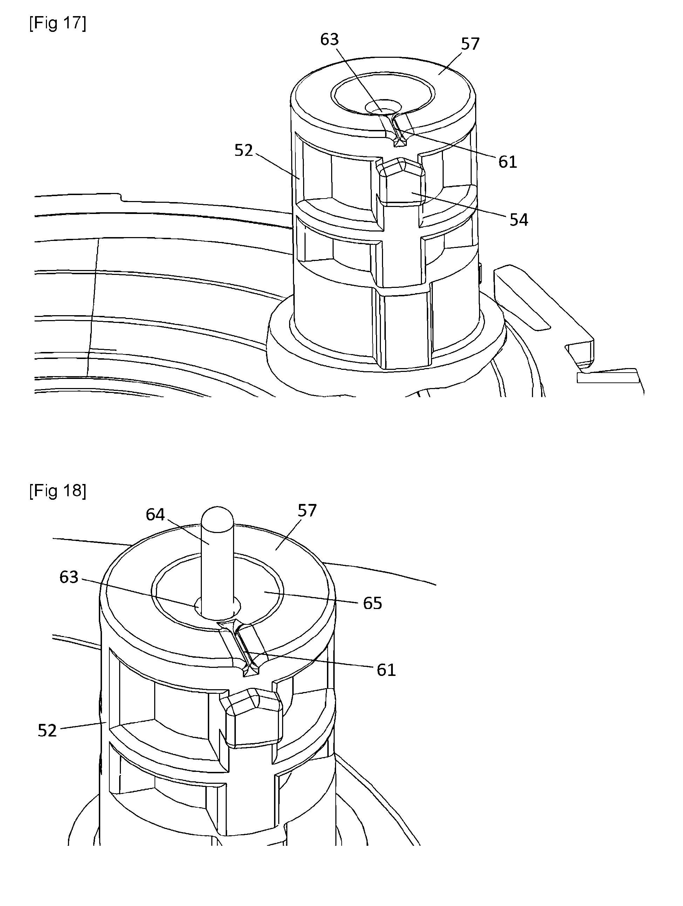

Comme montré sur la figure 18, la partie de support 52 comporte une rainure de passage 61 qui est ménagée dans la surface d'appui 57 et qui délimite en partie le passage d'écoulement d'air 58. La rainure de passage 61 peut par exemple s'étendre radialement par rapport à la direction de déplacement D3, et présenter une section transversale globalement en forme de V. Le dispositif de réglage de débit peut par exemple être configuré de telle sorte que, lorsque l'organe de réglage de débit 53 occupe la position de réglage minimale, l'élément d'étanchéité 56 est inapte à obturer entièrement la rainure de passage 61 et autorise un écoulement d'air minimal à travers le passage d'écoulement d'air 58.

Comme montré plus particulièrement sur la figure 20, le conduit d'amenée d'air 49 comprend un passage d'air calibré 62 qui est situé en aval de l'organe de réglage de débit 53 et qui est configuré pour définir un débit d'air maximal dans le conduit d'amenée d'air 49.

Selon le mode de réalisation représenté sur les figures, la partie de support 52 comporte un trou d'insertion 63 (qui peut présenter un diamètre compris entre 1,5 et 2 mm et par exemple égal à environ 1,8 mm) orienté sensiblement parallèlement à la direction de déplacement D3, et le dispositif de réglage de débit d'air 51 comporte un organe de restriction de passage 64, tel qu'une goupille ou un pointeau de forme globalement cylindrique, ayant une portion d'extrémité inférieure qui logée dans le trou d'insertion 63. L'organe de restriction de passage 64 est solidaire en mouvement de l'organe de réglage de débit 53, et est donc monté mobile dans le trou d'insertion 63 selon la direction de déplacement D3. De façon avantageuse, l'organe de restriction de passage 64 est allongé et s'étend selon une direction d'extension qui est parallèle à la direction de déplacement D3. Le trou d'insertion 63 et l'organe de restriction de passage 64 délimitent plus particulièrement le passage d'air calibré 62, de telle sorte que le passage d'air calibré 62 est annulaire.

Selon le mode de réalisation représenté sur les figures, la partie de support 52 comporte une cavité 65 qui débouche dans la face d'extrémité supérieure de la partie de support 52 et dans laquelle débouche le trou d'insertion 63. La cavité 65 et l'organe de réglage de débit 53 délimitent une chambre interne 66 configurée pour relier fluidiquement le passage d'écoulement d'air 58 au trou d'insertion 63.

Selon un autre mode de réalisation de l'invention non représenté sur les figures, le dispositif de moussage de lait 2 pourrait être dépourvu d'un réservoir de lait. Selon un tel mode de réalisation, le conduit d'amenée de lait 31 pourrait être relié fluidiquement à un réservoir de lait directement intégré dans l'appareil de distribution de boissons 3 (ou positionné sur ou à proximité du support de récipient 302 appartenant à l'appareil de distribution de boissons 3), et la tête de distribution de boisson 303 appartenant à l'appareil de distribution de boissons 3 pourrait comporter une sortie d'eau propre à être reliée à l'embout de raccordement 27 et distincte de la ou des buse(s) de sortie de café 304A, 304B.

Bien entendu, la présente invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Dispositif de moussage de lait (2) destiné à coopérer avec un appareil de distribution de boissons (3), le dispositif de moussage de lait (2) comportant :
- une partie de mélange (6) comprenant :
∘ un conduit d'écoulement principal (23) comportant une restriction de section (24), une première portion de conduit (25) qui est située en amont de la restriction de section (24) et qui s'étend jusqu'à la restriction de section (24), et une deuxième portion de conduit (26) qui est située en aval de la restriction de section (24) et qui s'étend depuis la restriction de section (24),
∘ une chambre de mélange (21) reliée fluidiquement au conduit d'écoulement principal (23) et munie d'un orifice de sortie (22),
- une partie de fermeture (41) mobile par rapport à la partie de mélange (6) entre une position de fermeture dans laquelle la partie de fermeture (41) ferme la chambre de mélange (21) et le conduit d'écoulement principal (23) et une position d'ouverture dans laquelle la chambre de mélange (21) et le conduit d'écoulement principal (23) sont ouverts et accessibles pour être nettoyés,
- un conduit d'amenée d'eau (28) comprenant un orifice de sortie d'eau (29) débouchant dans la première portion de conduit (25),
- un conduit d'amenée de lait (31) comprenant un orifice de sortie de lait (35) débouchant dans le conduit d'écoulement principal (23), et
- un conduit d'amenée d'air (49) relié fluidiquement au conduit d'écoulement principal (23),
**caractérisé en ce que** l'orifice de sortie de lait (35) présente une section de passage qui est supérieure à la section de passage d'une extrémité aval de la première portion de conduit (25).

2. Dispositif de moussage de lait (2) selon la revendication 1, dans lequel un rapport de la section de passage de l'orifice de sortie de lait (35) sur la section de passage de l'extrémité aval de la première portion de conduit (25) est supérieur à 3.

3. Dispositif de moussage de lait (2) selon la revendication 2, dans lequel le rapport de la section de passage de l'orifice de sortie de lait (35) sur la section de passage de l'extrémité aval de la première portion de conduit (25) est compris entre 3 et 40.

4. Dispositif de moussage de lait (2) selon l'une quelconque des revendications 1 à 3, dans lequel l'orifice de sortie de lait (35) présente un diamètre compris entre 3 et 6 mm.

5. Dispositif de moussage de lait (2) selon l'une quelconque des revendications 1 à 4, dans lequel la première portion de conduit (25) présente une section transversale de forme globalement rectangulaire.

6. Dispositif de moussage de lait (2) selon l'une quelconque des revendications 1 à 5, dans lequel l'extrémité aval de la première portion de conduit (25) présente une largeur comprise entre 0,4 et 2 mm, et/ou l'extrémité aval de la première portion de conduit (25) présente une hauteur comprise entre 0,6 et 1,5 mm.

7. Dispositif de moussage de lait (2) selon l'une quelconque des revendications 1 à 6, dans lequel l'extrémité aval de la première portion de conduit (25) présente une section de passage comprise entre 0,5 et 2 mm².

8. Dispositif de moussage de lait (2) selon l'une quelconque des revendications 1 à 7, dans lequel la deuxième portion de conduit (26) présente une section transversale de forme globalement rectangulaire.

9. Dispositif de moussage de lait (2) selon l'une quelconque des revendications 1 à 8, dans lequel l'extrémité amont de la deuxième portion de conduit (26) présente une hauteur comprise entre 1,5 et 3,5 mm, et/ou l'extrémité amont de la deuxième portion de conduit (26) présente une largeur comprise entre 2 et 5 mm.

10. Dispositif de moussage de lait (2) selon l'une quelconque des revendications 1 à 9, dans lequel l'extrémité amont de la deuxième portion de conduit (26) présente une section de passage comprise entre 2 et 18 mm².

11. Dispositif de moussage de lait (2) selon l'une quelconque des revendications 1 à 10, dans lequel une paroi de fond de la deuxième portion de conduit (26) comporte au moins une portion de surface qui est inclinée par rapport à l'horizontale de telle sorte que la hauteur de la deuxième portion de conduit (26) augmente en direction de la chambre de mélange (21).

12. Dispositif de moussage de lait (2) selon l'une quelconque des revendications 1 à 11, dans lequel la première portion de conduit (25) présente une section de passage qui diminue en direction de la restriction de section (24), et la deuxième portion de conduit (26) présente une section de passage qui augmente en direction de la chambre de mélange (21).

13. Dispositif de moussage de lait (2) selon l'une quelconque des revendications 1 à 12, dans lequel la chambre de mélange (21) est du type cyclonique et est configurée pour s'étendre sensiblement verticalement, le conduit d'écoulement principal (23) débouchant dans une partie supérieure de la chambre de mélange (21) et l'orifice de sortie (22) étant situé dans une partie inférieure de la chambre de mélange (21).

14. Dispositif de moussage de lait (2) selon l'une quelconque des revendications 1 à 13, dans lequel la deuxième portion de conduit (26) comporte deux parois latérales qui sont parallèles ou divergent en direction de la chambre de mélange (21) et qui sont inclinées l'une par rapport à l'autre d'un angle compris entre 0 et 20°.

15. Appareil de distribution de boisson (3) comportant un embout de sortie d'eau (308) et un dispositif de moussage de lait (2) selon l'une quelconque des revendications 1 à 14, le conduit d'amenée d'eau (28) du dispositif de moussage de lait (2) étant configuré pour être relié fluidiquement à l'embout de sortie d'eau (308).
